# FASCICULE DE BREVET EUROPEEN

(11) **EP 0 845 528 B1**
(45) Date de publication et mention de la délivrance du brevet: **07.03.2001**
(21) Numéro de dépôt: 97870059.9
(22) Date de dépôt: 30.04.1997
(51) Int. Cl.: C12C 7/04

(54) **Procedé de traitement du malt en amont de l'étape de filtration du moût**
Verfahren zur Behandlung von Malz vor der Würzefiltration
Method of treating malt before wort filtration

(30) Priorité: 29.11.1996 EP 96870153
(43) Date de publication de la demande: 03.06.1998
(73) Titulaire: Meura, 7500 Tournai (BE)
(72) Inventeur: Tigel, Rafael, Gil, 1342 Limelette (BE)
(74) Mandataire: Pieraerts, Jacques

(56) Documents cités:
- DE-A- 2 237 767
- DE-A- 2 639 871
- FR-A- 2 295 123
- GB-A- 2 003 399
- US-A- 4 228 188

## Description

L'invention concerne un procédé de traitement du malt en amont de l'étape de filtration du moût dans un processus de brassage.

Le procédé de brassage proprement dit est précédé par une étape importante constituée par le broyage du malt.

Cette première étape peut consister en un broyage fin ou un broyage grossier. Pour fixer les idées on notera qu'on doit comprendre par broyage fin et broyage grossier des broyages dans lesquels les pourcentages de matière récoltée sur 5 tamis et le fond correspondent plus ou moins aux valeurs exposées ci-dessous:

| Broyage grossier | | Broyage fin | |
|---|---|---|---|
| Ouverture tamis | %Mat. | Ouverture tamis | %Mat. |
| 1,25 mm | 8→10 | 1,25 mm | 0→1 |
| 1 mm | 6→10 | 1 mm | 1→3 |
| 0,5 mm | 18→22 | 0,5 mm | 5→7 |
| 0,25 mm | 30→36 | 0,25 mm | 32→36 |
| 0,16 mm | 8→12 | 0,16 mm | 20→25 |
| Fond | 12→18 | Fond | 30→35 |

Le broyage fin de l'orge germée, le malt ou le malt vert, se fait actuellement à l'aide de moulins à marteaux et dans certains cas de moulins à disques. En général un flux d'air est dirigé dans le moulin de manière à transporter les particules fines en dehors du moulin et à refroidir la mouture.

Cette technique présente des avantages tels que l'obtention d'un excellent rendement et d'un moût clair mais également de nombreux inconvénients. Parmi ceux-ci il y a le risque d'explosion, l'oxydation de la mouture et une élévation jusqu'à environ 45-50°C de la température. L'installation elle-même est onéreuse puisqu'elle nécessite, en dehors du moulin et de sa trémie de réception, des filtres à manches, des ventilateurs, des trémies à farine, divers transporteurs et la présence de clapets anti-explosion. De plus, un système d'hydratation de la farine doit également être prévu.

Dans le broyage grossier, qui n'est pas concerné par la présente invention, le malt ou le malt vert est broyé dans des broyeurs à rouleaux. La partie fibreuse, constituée par l'enveloppe du grain, traverse des cylindres pour être partiellement broyée, la fraction granuleuse, l'amidon, est broyée plus finement.

En vue d'améliorer cette technique, et de préserver la partie fibreuse du grain il a déjà été suggéré d'asperger le grain de malt avec de l'eau ou à l'aide de vapeur en vue d'humidifier l'enveloppe du grain. Celle-ci devient en effet moins cassante lors du broyage.

Il a, de même, été proposé de tremper le grain de malt dans l'eau afin d'humidifier tout le grain et cela pour la même raison que précédemment (voir DE-A-2639271). Selon cette technique il est parfois suggéré d'évacuer au moins la majeure partie de l'eau avant le broyage.

Dans l'étape suivante qui s'effectue en amont des filtres à moût, le brassage proprement dit est conduit à une concentration eau/malt constante et les cuves de traitement à double enveloppe sont chauffées à une température comprise entre 50 et 75°C approximativement. Ceci permet à chaque groupe d'enzymes de travailler à sa température optimum pendant un temps déterminé.

L'invention propose des perfectionnements aux deux étapes ci-dessus et cela dans le but de réaliser une simplification considérable des installations nécessaires au traitement du malt à ce niveau, c.à.d. en amont des filtres à moût, d'éviter l'oxydation, de rendre l'installation tout à fait sûre et d'optimaliser la productivité des enzymes.

Pour réaliser cet objectif conformément à l'invention on applique un broyage fin sous l'eau de grains non hydratés de malt.

Dans une forme de réalisation possible on fait usage d'une partie de l'eau utilisée habituellement dans l'hydratation du malt, dans l'étape de broyage, l'autre partie de l'eau étant rajoutée par après.

Toujours selon l'invention, on procède, après le broyage du malt, au brassage de manière à entamer celui-ci à un niveau de concentration élevé et à augmenter le degré de dilution à mesure que croît la température du brassin.

Dans une forme de réalisation particulièrement avantageuse on entame le procédé de brassage à une température située entre environ 40 et environ 50°C pour une concentration maximale de 1,5 | à 2 l d'eau par kg de malt.

Dans une première forme de réalisation la dilution précitée est réalisée par addition d'eau.

Selon une variante avantageuse la dilution précitée est réalisée par un mélange eau/vapeur.

D'autres détails et avantages de l'invention ressortiront de la description d'un procédé de traitement du malt en amont de l'étape de filtration du moût dans un processus de brassage selon l'invention.

Cette description n'est donnée qu'à titre d'exemple et ne limite pas l'invention.

Le procédé selon l'invention est donc caractérisé par deux étapes, la première étant constituée par le broyage fin sous eau et la seconde par un brassage qui est intimement lié à ce broyage sous eau.

L'étape de broyage sous eau permet un contrôle aisé de la température, l'eau ayant une capacité calorifique importante, la température du broyeur pourra aisément être contrôlée.

En effet, s'il est établi que 100 kg de malt entraîne la consommation de 200 l d'eau, l'énergie dépensée sous forme de chaleur est de 1254 kJ (300 kcal) tandis que la montée de la température maximale sera de 1,1°C.

Le broyage fin sous eau assure un mélange eau/farine complet, attendu que les forces de cisaillement importantes régnant dans le broyeur permettront une hydratation de la farine sans formation de grumeaux, et cela même pour des dilutions très faibles.

Le procédé de broyage fin sous eau selon l'invention permet une simplification considérable des appareillages nécessités par le broyage à sec, et évite tout risque d'explosion.

Dans l'étape suivante, qui est l'étape de brassage, la dilution optimum est appliquée à chaque stade de cette étape de brassage ce qui permet aux enzymes de travailler dans les conditions optimales, non seulement de température comme dans le procédé classique, mais également de dilution.

Dans ce but, le brassage débute dans des conditions d'empâtage très concentrée du grain broyé. La dilution progressive se fera en fonction de la montée de la température. Ceci permet à chaque groupe d'enzymes de travailler sous un degré de dilution qui lui assure une productivité maximale. La dilution optimale est conditionnée par une température plus élevée.

Les enzymes qui sont visées ici sont les protéases, les Beta-amylases et les alpha amylases.

Il est entendu que cette dilution peut se faire à l'aide d'eau ou d'un mélange eau/vapeur ce qui permet d'assurer en même temps le chauffage du brassin.

En travaillant conformément au procédé selon l'invention, il est possible de raccourcir de 25 % environ la durée du brassage. Le gain de productivité qui en découle peut être estimé à environ 20 %.

Il doit être entendu que des variations dans les divers paramètres de température ou degrés de dilutions sont couvertes par la présente demande pour autant que celles-ci tombent dans le cadre des revendications annexées.

## Revendications

1. Procédé de traitement du malt en amont de l'étape de filtration du moût dans un processus de brassage, caractérisé en ce qu'on applique un broyage fin sous l'eau de grains non hydratés de malt.

2. Procédé suivant la revendication 1, caractérisé en ce que l'étape de broyage comprend un cisaillement des grains non hydratés avec formation d'une farine et une hydratation de la farine sans formation de grumeaux.

3. Procédé selon l'une des revendications 1 et 2, caractérisé en ce qu'on fait usage d'une partie d'eau pour la mise sous l'eau dans l'étape broyage et d'une autre partie d'eau ajoutée après l'étape de broyage.

4. Procédé selon l'une des revendications 1 à 3, caractérisé en ce qu'on utilise de 2 à 3 litres d'eau par kg de malt à broyer.

5. Procédé selon l'une des revendications 1 -4, caractérisé en ce qu'on procède, après broyage du malt, au brassage de manière à entamer celui-ci à un niveau de concentration élevé et à augmenter progressivement le degré de dilution à mesure que croît la température du brassin.

6. Procédé selon la revendication 4, caractérisé en ce qu'on entame le procédé de brassage à une température de début de brassage située entre 40 et 50°C du brassin, pour une concentration de 1,5 à 2 l d'eau par kg de malt.

7. Procédé selon la revendication 6, caractérisé en ce qu'on procède à une dilution progressive du brassin jusqu'à une concentration en fin de brassage qui se situe entre environ 2 à 3 l d'eau par kg de malt à une température de fin de brassage supérieure à ladite température de début de brassage.

8. Procédé selon l'une des revendications 5-7, caractérisé en ce que la dilution précitée est réalisée par addition d'eau.

9. Procédé selon l'une des revendications 5-7, caractérisé en ce que la dilution précitée est réalisée par un mélange eau/vapeur.

## Patentansprüche

1. Verfahren zur Behandlung von Malz vor einem Schritt zum Filtrieren der Würze in einem Brauprozess, **gekennzeichnet durch** die Anwendung eines Feinmahlvorgangs auf die nicht-hydratisierten Malzkörner unter Wasser.

2. Verfahren nach Anspruch 1, **dadurch gekennzeichnet, dass** der Mahlschritt ein Zerteilen der nicht-hydratisierten Körner unter Bildung eines Mehls sowie ein Hydratisieren des Mehls ohne Ausbildung von Klumpen umfasst.

3. Verfahren nach einem der Ansprüche 1 oder 2, **dadurch gekennzeichnet,** dass im Mahlschritt ein Teil Wasser zum Unter-Wasser-Setzen verwendet wird und nach dem Mahlschritt ein anderer Teil Wasser zugesetzt wird.

4. Verfahren nach einem der Ansprüche 1 bis 3, **dadurch gekennzeichnet,** dass 2 bis 3 Liter Wasser pro kg des zu mahlenden Malzes verwendet werden.

5. Verfahren nach einem der Ansprüche 1 bis 4, **dadurch gekennzeichnet, dass** nach dem Mahlen des Malzes in solcher Weise auf den Brauvorgang übergegangen wird, dass dieser auf erhöhter Konzentration begonnen wird und der Verdünnungsgrad fortschreitend in dem Maß erhöht wird, in dem die Temperatur des Brauguts steigt.

6. Verfahren nach Anspruch 4, **dadurch gekennzeichnet,** dass der Brauvorgang bei einer Brauanfangstemperatur des Brauguts zwischen 40 und 50 °C begonnen wird, für eine Konzentration von 1,5 bis 2 l Wasser pro kg Malz.

7. Verfahren nach Anspruch 6, **dadurch gekennzeichnet, dass** mit einer fortschreitenden Verdünnung des Brauguts bis zu einer Konzentration am Ende des Brauvorgangs vorgegangen wird, die zwischen ungefähr 2 und 3 l Wasser pro kg Malz bei einer Brauendetemperatur über der genannten Brauanfangstemperatur liegt.

8. Verfahren nach einem der Ansprüche 5 bis 7, **dadurch gekennzeichnet,** dass das genannte Verdünnen durch Hinzufügen von Wasser erfolgt.

9. Verfahren nach einem der Ansprüche 5 bis 7, **dadurch gekennzeichnet,** dass das genannte Verdünnen durch ein Wasser/Dampf-Gemisch erfolgt.

## Claims

1. A method of treating malt upstream of the wort filtration stage in a brewing process, characterised in that fine comminution under water of non-hydrated malt grains is carried out.

2. A method according to claim 1, characterised in that the comminution stage comprises shearing the non-hydrated grains to form a flour and hydration of the flour without forming lumps.

3. A method according to either of claims 1 and 2, characterised by using part of the water for the placement under water in the comminution stage and another part of the water added after the comminution stage.

4. A method according to any one of claims 1 to 3, characterised in that 2 to 3 litres of water are used per kg of malt to be comminuted.

5. A method according to any one of claims 1 to 4, characterised in that, after communition of the malt, the mashing is carried out so as to bring it to a high level of concentration and to increase gradually the degree of dilution as the temperature of the mash rises.

6. A method according to claim 4, characterised in that the mashing process is carried out at a temperature, at the start of mashing, of between 40 and 50°C of the mash, for a concentration of 1.5 to 2 l of water per kg of malt.

7. A method according to claim 6, characterised in that a gradual dilution of the mash is carried out until reaching a concentration at the end of mashing which is between approximately 2 to 3 l of water per kg of malt at a temperature at the end of mashing which is higher than said temperature at the start of mashing.

8. A method according to any one of claims 5 to 7, characterised in that the aforementioned dilution is achieved by the addition of water.

9. A method according to any one of claims 5 to 7, characterised in that the aforementioned dilution is achieved by a water/steam mixture.
